# EUROPEAN PATENT APPLICATION

(11) **EP 2 800 374 A1**
(43) Date of publication of application: **05.11.2014**
(21) Application number: 12861616.6
(22) Date of filing: 27.12.2012
(51) Int. Cl.: H04N 9/07

(54) **IMAGING DEVICE, CONTROL METHOD FOR IMAGING DEVICE, AND CONTROL PROGRAM**

(30) Priority: 27.12.2011 JP 2011286693
(71) Applicant: Fujifilm Corporation, Minato-ku Tokyo 106-8620 (JP)
(72) Inventor: TANAKA, Seiji, Saitama-shi, Saitama 331-9624 (JP); HAYASHI, Kenkichi, Saitama-shi, Saitama 331-9624 (JP); KAWAI, Tomoyuki, Saitama-shi, Saitama 331-9624 (JP); KURAHASHI, Hidekazu, Saitama-shi, Saitama 331-9624 (JP); KAWAMURA, Noriko, Saitama-shi, Saitama 331-9624 (JP); HORII, Hirofumi, Saitama-shi, Saitama 331-9624 (JP)
(74) Representative: Hoffmann Eitle
(86) International application number: PCT/JP2012/083977
(87) International publication number: WO 2013/100097

(57) **Abstract**

An imaging apparatus includes: an image pickup device (14) including plural photoelectric conversion elements arrayed in a first direction and second direction; a color filter that has a repeatedly disposed basic array pattern of (N × M) pixels placed in a predetermined pattern in the first direction and the second direction (wherein N and M are integers of 3 or more); a line image data generation means that reads pixel signals from plural pixels at a set cycle from the image pickup device (14), and, from the read pixel signals, generates line image data configured from pixel signals of pixels, from out of the plural pixels, that are arrayed running along the second direction and are arrayed at a line cycle of (N - k) in the first direction (wherein 0 < k < N); and an image data generation means that generates image data based on the line image data.

## Description

### [Technical Field]

The present invention relates to an imaging apparatus, and a control method and a control program for an imaging apparatus, and in particular to an imaging apparatus equipped with a color image pickup device, and a control method and control program for an imaging apparatus of the same.

### [Background Art]

A primary system color Bayer array (see, for example, Patent Documents 1 to 3), this being a color array widely employed in color image pickup devices, has red (R) and blue (B) placed in sequential lines of a chessboard pattern of green (G) pixels, to which the human eye is most sensitive and that contribute most to obtaining a brightness signal.

### [Prior Art Documents]

### [Patent Documents]

[Patent Document 1] Japanese Patent Application Laid-Open (JP-A) No. 2002-135793.
[Patent Document 2] Japanese Patent No. 3960965
[Patent Document 3] JP-A No. 2004-266369

### [DISCLOSURE OF INVENTION]

### [Problem to be Solved by Invention]

However, in a color image pickup device that employs a conventional Bayer array, for example in cases in which thinned reading is performed in the vertical direction in order to generate image data for video use, in situations where for example one line's worth of image data has been read for each 2n lines (wherein n is a positive integer) in the vertical direction (vertical direction 1/2n thinning, even number thinning), this results in line image data being read that only contains two colors: G and R, or G and B, and so color reproduction is not possible. Therefore, in thinned reading, generally one line's worth of image data is read for each (2n + 1) lines (vertical direction 1/(2n + 1) thinning, odd number thinning). Moreover, in other cases in which thinned reading is performed, in order to obtain color reproduction, horizontal lines containing G and R, and horizontal lines containing G and B need to be read alternately, placing severe limitations on reading methods.

Moreover, in a Bayer array, there is a problem with reproduction precision when generating high frequency signals in diagonal directions for G signals, and in the horizontal direction and the vertical direction for R and B signals, there is a problem of an inability to suppress generation of color moire (false color) for high frequency signals, and when thinned reading is performed as described above, since the same color array results as that of the original Bayer array, the same problems occur.

The present invention has been configured to solve the above problems, and an object thereof is to provide an imaging apparatus, and a control method and a control program for an imaging apparatus, that enable efficient thinned reading to be performed when an image pickup device equipped with a color filter employing an array other than a Bayer array.

### [Means for Solving Problem]

In order to solve the above problems, an imaging apparatus of the present invention includes: an image pickup device including plural photoelectric conversion elements arrayed in a predetermined first direction and a second direction intersecting with the first direction; a color filter that is provided above plural pixels configured by the plural photoelectric conversion elements, the color filter having a repeatedly disposed basic array pattern wherein a first filter corresponding to a first color that contributes most to obtaining a brightness signal, and second filters respectively corresponding to 2 or more second colors other than the first color, are placed in a predetermined pattern of (N × M) pixels in the first direction and the second direction (wherein N and M are integers of 3 or more); a line image data generation means that reads pixel signals from plural pixels at a set cycle from the image pickup device, and, from the read pixel signals, generates line image data configured from pixel signals of pixels, from out of the plural pixels, that are arrayed running along the second direction and are arrayed at an (N - k) line cycle in the first direction (wherein k is a positive integer such that 0 < k < N); and an image data generation means that generates image data based on the line image data.

According to the invention, pixel signals are read from plural pixels at a set cycle from the image pickup device, and, from the read pixel signals, and line image data is generated configured from pixel signals of pixels, from out of the plural pixels, that are arrayed running along the second direction and are arrayed at the (N - k) line cycle in the first direction. Namely, line image data is generated at a cycle of less than the number of pixels N of the basic array pattern in the first direction, an a smaller thinning ratio therefore suffices compared to cases in which line image data is generated at a cycle of equal to or greater than the number of pixels of the basic array pattern in the first direction, thus enabling deterioration of image quality to be suppressed.

Note that the line image data generation means may be configured so as to read, as the set cycle, the pixel signals from the image pickup device at the (N - k) line cycle in the first direction, and to generate the line image data.

According to the invention, the pixel data is thinned in the first direction and read from the image pickup device, enabling the time for reading the pixel signals from the image pickup device to be reduced compared to cases in which image data is generated by reading all lines' worth of pixel signals, then extracting line image data arrayed at the (N - k) line cycle in the first direction.

Moreover, the basic array pattern may be configured so as to have line symmetry with respect to the first direction for the entire region of the basic array pattern, or to have line symmetry with respect to the first direction in each region of two half cycles of the basic array pattern in the first direction, and the line image data generation means may generate line image data configured from pixel signals of pixels that are arrayed running along the second direction and are arrayed, as the set cycle, at an (N - 1) line cycle in the first direction.

According to the invention, the image after thinning also is an image containing an image in which the basic array pattern is repeated, similarly to before thinning, enabling processing to be applied that is common to the image processing of non-thinned image data, such as in still image capture.

Moreover, configuration may be made such that: the line image data generation means generates line image data configured from pixel signals of pixels that are arrayed running along the second direction and are arrayed, as the set cycle, at an (N - k) line cycle in the first direction (wherein 0 < k ≤ N/2), and generates line image data configured from pixel signals of pixels that are arrayed running along the second direction and are arrayed at an N line cycle in the first direction away from the (N - k) line cycle line image data; and so as to further include a pixel mixing means that respectively mixes pixels that are the same color pixels as each other from the line image data configured from the pixel signals of the pixels that are arrayed running along the second direction and are arrayed at the (N - k) line cycle in the first direction, and from the line image data configured from pixel signals of the pixels that are running arrayed along the second direction and are arrayed at the N line cycle in the first direction away from the (N - k) line image data.

According to the invention, pixel mixing is performed for pixels that are the same color pixels as each other from the line image data read running along the second direction at the (N - k) line cycle in the first direction, and from the line image data read running arrayed along the second direction at the N line cycle in the first direction away from the (N - k) line image data, enabling a pixel S/N ratio to be improved compared to cases in which pixel mixing is not performed.

Moreover, the image pick up device may be configured such that it includes plural pixels of (N - k) pixels or less in the first direction as a common pixel, and includes an amplification means that amplifies an image capture signal for every common pixel.

According to the invention, plural lines of pixel data in the first direction are not read within each of the common pixels, thereby enabling a large misalignment in the exposure timing of each line to be prevented.

Moreover, configuration may made so as to further include: a switching means that switches between a first generation method that generates from the image pickup device line image data configured from pixel signals of pixels that are arrayed running along the second direction and are arrayed at an (N - k) line cycle in the first direction (wherein 0 < k < N), and a second generation method that generates from the image pickup device line image data configured from pixel signals of pixels that are arrayed running along the second direction and are arrayed at an (N + k) line cycle in the first direction.

The invention enables, for example, switching between generation by the first generation method or generation by the second generation method according to the image capture mode, thereby enabling the resolution and the S/N ratio of images to be appropriately controlled according to the image capture mode, and also enabling Automatic White Balance (AWB) control and Automatic Exposure (AE) control to be appropriately set according to the image capture mode.

Moreover, the first filter may be configured such that one or more of the first filter is placed in each line in the color filter plane in the first direction, the second direction, and third directions that intersect with the first direction and the second direction; and the second filters that respectively correspond to each color of the second colors are placed such that there is 1 or more of each in each line in the basic array pattern in the first direction and the second direction.

According to the invention, the first filter that corresponds to the first color contributing the most to obtaining a brightness signal is placed in the color filter in each of the lines in the first direction to the third directions, thereby enabling the reproduction precision of synchronization processing to be raised in high frequency regions. Moreover, the second filters corresponding to 2 or more second colors other than the first color are placed such that there is 1 or more of each in each line in the basic array pattern in the first direction and the second direction, enabling generation of color moire (false color) to be reduced, and a high resolution to be obtained.

Configuration may be made such that the color filter includes a square array corresponding to 2 × 2 pixels configured from the first filter.

According to the invention, which direction, out of each of the four directions, is the brightness correlation direction can be determined by determination of the minimum pixel separation based on difference values of pixel values between each of the pixels of the 4 pixels of the square array corresponding to the 2 × 2 pixels.

Configuration may be made such that the first color is green (G), and the second colors are red (R) and blue (B).

Configuration may be made such that: the color filter includes an R filter, a G filter, and a B filter corresponding to colors red (R), green (G) and blue (B); and the color filter is configured by a first array and a second array alternately arrayed in the first direction and the second direction, wherein the first array corresponds to 3 × 3 pixels with the G filter placed at the center and the 4 corners, the B filter placed at the top and bottom of the central G filter, and the R filter placed at the left and right of the central G filter, and the second array corresponds to 3 × 3 pixels with the G filter placed at the center and the 4 corners, the R filter placed at the top and bottom of the central G filter, and the B filter placed at the left and right of the central G filter.

According to the invention, if 5 × 5 pixels (a local region of a mosaic image) are extracted centered on the first array or the second array, 2 × 2 pixels of G pixels are present at the 4 corners of the 5 × 5 pixels. The pixel values of these 2 × 2 pixels of G pixels can be employed to determine the correlation direction out of 4 directions.

Moreover, configuration may be made such that: the color filter includes an R filter, a G filter, and a B filter corresponding to colors red (R), green (G) and blue (B); and the color filter is configured by a first array and a second array alternately arrayed in the first direction and the second direction, wherein the first array corresponds to 3 × 3 pixels with the R filter placed at the center, the B filter placed at the 4 corners, and the G filter placed at the top, bottom, left and right of the central R filter, and the second array corresponds to 3 × 3 pixels with the B filter placed at the center, the R filter placed at the 4 corners, and the G filter placed at the top, bottom, left and right of the central B filter.

According to the invention, if 5 × 5 pixels (a local region of a mosaic image) are extracted centered on the first array or the second array, there is a G pixel present in adjacent contact in the horizontal direction and the vertical direction with the central pixel (the R pixel or the B pixel) of the 5 × 5 pixels. The pixel values of these G pixels (a total of 8 pixels) can be employed to determine the correlation direction out of 4 directions.

Moreover, the color filter may be configured such that it has point symmetry about the center of the basic array pattern.

The invention enables the circuit scale of a processing circuit at a later stage to be made smaller

A control method for an imaging apparatus of the present invention includes: an image pickup device including plural photoelectric conversion elements arrayed in a predetermined first direction and a second direction intersecting with the first direction, and a color filter that is provided above plural pixels configured by the plural photoelectric conversion elements, the color filter having a basic array pattern repeatedly disposed along the first direction and the second direction, wherein in the basic array pattern a first filter corresponding to a first color that contributes most to obtaining a brightness signal, and second filters respectively corresponding to 2 or more second colors other than the first color, are placed in a predetermined pattern of (N × M) pixels in the first direction and the second direction (wherein N and M are integers of 3 or more), placed such that the first filter and at least one color of the second filters are placed in the first direction and the second direction. The control method includes: reading pixel signals from plural pixels at a set cycle from the image pickup device; generating, from the read pixel signals, line image data configured from pixel signals of pixels, from out of the plural pixels, that are arrayed running along the second direction and are arrayed at an (N - k) line cycle in the first direction (wherein k is a positive integer such that 0 < k < N); and generating image data based on the line image data.

A control program of the present invention causes processing to be executed in a computer that controls an imaging apparatus including an image pickup device including plural photoelectric conversion elements arrayed in a predetermined first direction and a second direction intersecting with the first direction, and a color filter that is provided above plural pixels configured by the plural photoelectric conversion elements, the color filter having a repeatedly disposed basic array pattern wherein a first filter corresponding to a first color that contributes most to obtaining a brightness signal, and second filters respectively corresponding to 2 or more second colors other than the first color, are placed in a predetermined pattern of (N × M) pixels in the first direction and the second direction (wherein N and M are integers of 3 or more), placed such that the first filter and at least one color of the second filters are placed in the first direction and the second direction. The processing includes: a step of reading pixel signals from plural pixels at a set cycle from the image pickup device; a step of generating, from the read pixel signals, line image data configured from pixel signals of pixels, from out of the plural pixels, that are arrayed running along the second direction and are arrayed at an (N - k) line cycle in the first direction (wherein k is a positive integer such that 0 < k < N); and a step of generating image data based on the line image data.

A control program of the present invention causes that causes processing to be executed in a computer, the processing including: a step of generating line image data from pixel signals of pixel signals in plural pixels read at a set cycle from an image pickup device including plural photoelectric conversion elements arrayed in a predetermined first direction and a second direction intersecting with the first direction, and a color filter that is provided above plural pixels configured by the plural photoelectric conversion elements, the color filter having a repeatedly disposed basic array pattern wherein a first filter corresponding to a first color that contributes most to obtaining a brightness signal, and second filters respectively corresponding to 2 or more second colors other than the first color, are placed in a predetermined pattern of (N × M) pixels in the first direction and the second direction (wherein N and M are integers of 3 or more), with the line image data configured from pixel signals of pixels, from out of the plural pixels, that are arrayed running along the second direction and are arrayed at a cycle of (N - k) in the first direction (wherein k is a positive integer such that 0 < k < N); and a step of generating image data based on the line image data.

### [Advantageous Effects of Invention]

The present invention has an advantageous effect that effective thinning and reading can be performed in cases in which an image pickup device is employed that is provided with a color filter with an array other than a Bayer filter array.

### [BRIEF DESCRIPTION OF THE DRAWINGS]

[Fig. 1] Fig. 1 is a schematic block diagram of an imaging apparatus according to a first exemplary embodiment.
[Fig. 2] Fig. 2 is a configuration diagram of a color filter according to the first exemplary embodiment.
[Fig. 3] Fig. 3 is a diagram illustrating a basic array pattern contained in a color filter according to the first exemplary embodiment.
[Fig. 4] Fig. 4 is a diagram illustrating a color filter in which a 6 × 6 pixel basic array pattern contained in a color filter according to the first exemplary embodiment is split into 3 × 3 pixel A arrays and B arrays that are repeatedly disposed along a horizontal direction and a vertical direction.
[Fig. 5] Fig. 5 is a diagram illustrating a distinctive placement of G pixels in a color filter according to a third exemplary embodiment.
[Fig. 6] Fig. 6 is an explanatory diagram regarding an image when one line's worth of image data is read for each (N - 1) lines in the vertical direction.
[Fig. 7] Fig. 7 is an explanatory diagram regarding line symmetry of a color filter in the vertical direction.
[Fig. 8] Fig. 8 is an explanatory diagram regarding line symmetry of a color filter in the vertical direction.
[Fig. 9] Fig. 9 is an explanatory diagram regarding line symmetry of a color filter in the vertical direction.
[Fig. 10] Fig. 10 is a flow chart illustrating processing executed in a controller.
[Fig. 11] Fig. 11 is a configuration diagram of a color filter according to a second exemplary embodiment.
[Fig. 12] Fig. 12 is a diagram illustrating a basic array pattern contained in a color filter according to the second exemplary embodiment.
[Fig. 13A] Fig. 13A is a diagram illustrating a color filter in which a 6 × 6 pixel basic array pattern contained in a color filter according to the second exemplary embodiment is split into 3 × 3 pixel A arrays and B arrays that are repeatedly disposed along a horizontal direction and a vertical direction.
[Fig. 13B] Fig. 13B is a diagram illustrating a distinctive placement of G pixels in a color filter according to the second exemplary embodiment.
[Fig. 14] Fig. 14 is a diagram to explain pixel summing processing according to a third exemplary embodiment.
[Fig. 15] Fig. 15 is a schematic configuration diagram of an image pickup device configured by a CMOS sensor according to a fourth exemplary embodiment.
[Fig. 16] Fig. 16 is a configuration diagram illustrating a configuration of a common pixel.
[Fig. 17] Fig. 17 is an explanatory diagram regarding timing, such as of light exposure of each scan line.
[Fig. 18] Fig. 18 is a diagram for explaining switching of read lines according to a fifth exemplary embodiment.
[Fig. 19] Fig. 19 is a diagram for explaining switching of read lines according to the fifth exemplary embodiment.
[Fig. 20] Fig. 20 is a diagram of a modified example of a color filter.
[Fig. 21] Fig. 21 is a diagram of a modified example of a color filter.
[Fig. 22] Fig. 22 is a diagram of a modified example of a color filter.
[Fig. 23] Fig. 23 is a diagram of a modified example of a color filter.
[Fig. 24] Fig. 24 is a diagram of a modified example of a color filter.
[Fig. 25] Fig. 25 is a diagram of a modified example of a color filter.
[Fig. 26] Fig. 26 is a diagram of a modified example of a color filter.
[Fig. 27] Fig. 27 is a diagram of a modified example of a color filter.

### [DESCRIPTION OF EMBODIMENTS]

Explanation follows regarding exemplary embodiments of the present invention, with reference to the drawings.

### First Exemplary Embodiment

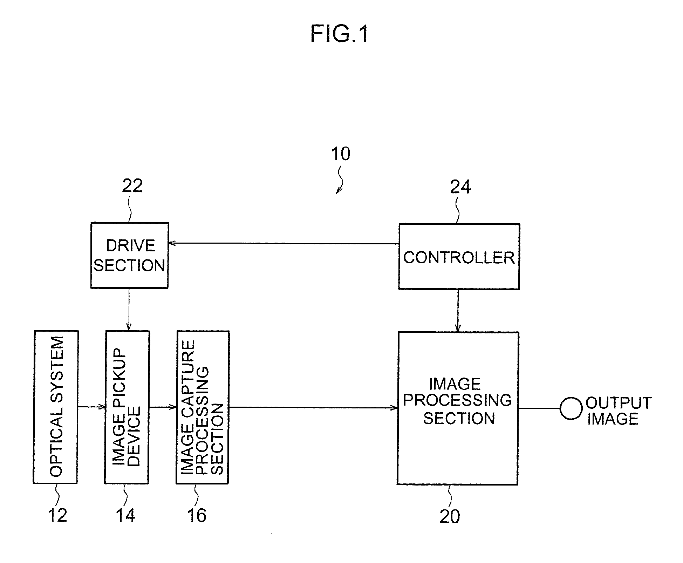

Fig. 1 is a schematic block diagram illustrating an imaging apparatus 10 according to the present exemplary embodiment. The imaging apparatus 10 is configured including an optical system 12, an image pickup device 14, an image capture processing section 16, an image processing section 20, a drive section 22, and a controller 24.

The optical system 12 is configured including, for example, a lens set configured from plural optical lenses, an aperture adjustment mechanism, a zoom mechanism, and an automatic focusing mechanism.

The image pickup device 14 is what is referred to as a 1-chip image pickup device configured by an image pickup device, such as for example a Charge Coupled Device (CCD) or a Complementary Metal Oxide Semiconductor (CMOS), containing plural photoelectric conversion elements arrayed in the horizontal direction and vertical direction, with a color filter disposed above the image pickup device.

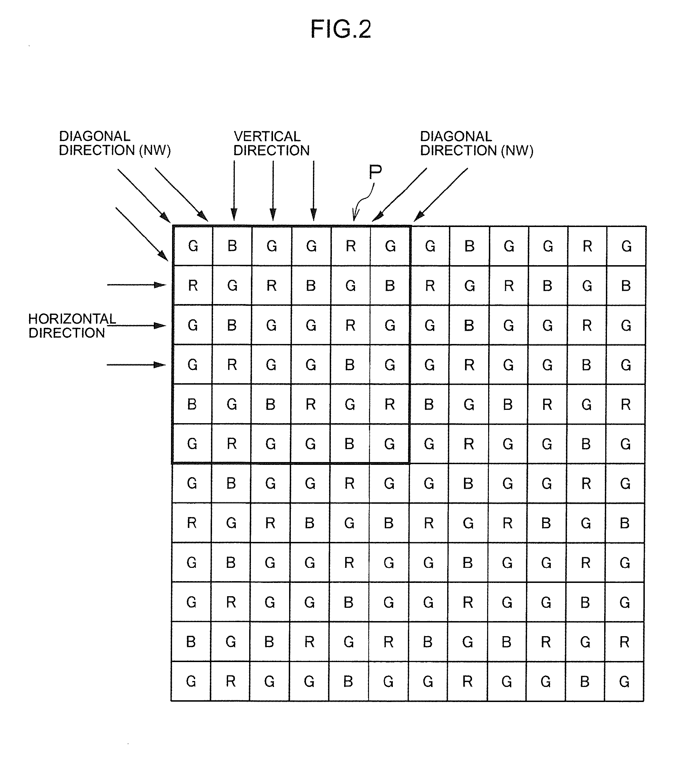

Fig. 2 illustrates a portion of a color filter according to the present exemplary embodiment. One out of 3 primary color filters red (R), green (G) and blue (B) is placed over each of the pixels.

### Color Filter Array Features

The color filter of the first exemplary embodiment includes the following features (1) to (6).

### Feature (1)

The color filter array has a repeatedly disposed basic array pattern of a predetermined pattern of (N × M) pixels (wherein N, M are integers of 3 or more) in the vertical direction and the horizontal direction of the 3 primary color filters red (R), green (G) and blue (B), wherein the green (G) filter and at least one color filter out of the red (R) or the blue (B) is placed in each of the vertical direction and the horizontal direction.

The color filter according to the present exemplary embodiment illustrated in Fig. 2 includes a basic array pattern P (the pattern indicated by the bold frame) formed from square array patterns corresponding to, as an example, 6 × 6 pixels (N = M = 6), with the basic array pattern P disposed so as to repeat in both the horizontal direction (a first direction) and the vertical direction (a second direction). Namely, the color filter is arrayed such that the respective filters of each color R, G, B (the R filters, G filters, B filters) have a specific periodicity.

Thus arraying the R filters, G filters and B filters with a specific periodicity enables processing to be performed in a repeating pattern during, for example, synchronization processing (also referred to as demosaic processing, the same applies below) of R, G, B signals read from the color image pickup device.

### Feature (2)

The color filter array illustrated in Fig. 2 has the G filter, that corresponds to the color contributing the most to obtaining a brightness signal (the color G in the present exemplary embodiment) placed in each line in the color filter array in the vertical direction that is the first direction, the horizontal direction that is the second direction, and third directions in the color filter plane that intersect with the first direction and the second direction, namely diagonal directions (NE, NW) (third directions). Note that NE means a diagonal direction toward the top right, and NW means a diagonal direction toward the bottom right. For example, for a square pixel array, the diagonal top right direction and the diagonal bottom right direction are directions at 45° with respect to the horizontal direction. However, in a rectangular pixel array, these are the directions of the pair of diagonals of a rectangle, and their angle varies according to the lengths of the long sides and the short sides.

Placing the G filters corresponding to the brightness system pixels in each of the lines in the vertical direction, horizontal direction, and diagonal directions (NE, NW) of the color filter array, enables the reproduction precision of synchronization processing to be raised in high frequency regions, irrespective of the directionality of the high frequency.

### Feature (3)

In the color filter array illustrated in Fig. 2, 1 or more of each of the R filter and B filter, corresponding to the 2 or more colors other than the above color G (colors R, B in the present exemplary embodiment), is disposed in each line in the basic array pattern P in the vertical direction and horizontal direction of the color filter array.

Disposing the R filter and the B filter in each line in the vertical direction and horizontal direction of the color filter array enables generation of color moire (false color) to be reduced.

This thereby enables an optical low pass filter for suppressing false color generation to be omitted from placement on the optical path of the optical system, from the incident face to the imaging plane, or, even in cases in which an optical low pass filter is applied, one can be employed that has a weak action to cut the high frequency components to prevent false color generation, thereby enabling deterioration of resolution to be avoided.

### Feature (4)

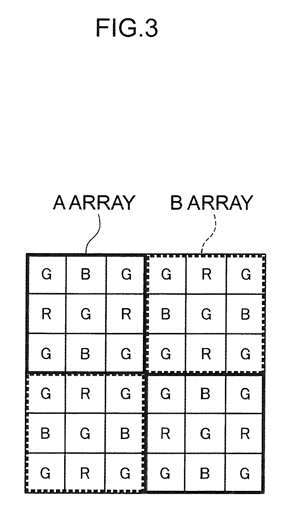

Fig. 3 illustrates a state in which the basic array pattern P illustrated in Fig. 2 has been divided into 4 sets of 3 × 3 pixels.

The basic array pattern P, as illustrated in Fig. 3, may be perceived an A array of the 3 × 3 pixels surrounded by the solid line frame, and a B array of the 3 × 3 pixels surrounded by the broken line frame, arrayed so as to be alternately disposed along the horizontal and vertical directions.

In both the A array and the B array, the G filters that are the brightness system pixels are placed at the 4 corners and at the center, thereby being placed over both diagonal lines. In the A array, R filters are placed on both sides of the central G filter in the horizontal direction, and B filters are placed on both sides of the central G filter in the vertical direction. However in the B array, B filters are placed on both sides of the central G filter in the horizontal direction, and R filters are placed on both sides of the central G filter in the vertical direction. Namely, the A array and the B array have reverse positional relationships for the R filters and the B filters, but have similar placement otherwise.

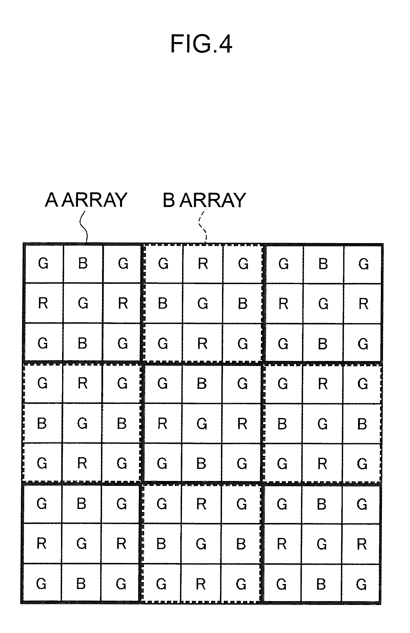

Due to disposing the A array and the B array alternately in the vertical direction and the horizontal direction, as illustrated in Fig. 4, the 4 corner G filters in the A array and the B array form square array G filters corresponding to 2 × 2 pixels.

Namely, the color filter array (basic array pattern P) illustrated in Fig. 2 includes square arrays corresponding to 2 × 2 pixels configured by G filters.

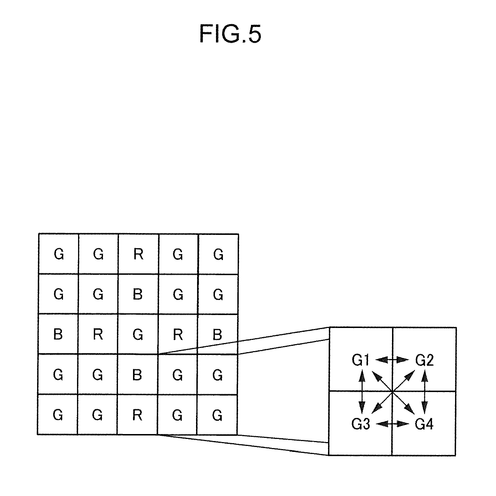

When, as illustrated in Fig. 5, a 5 × 5 pixel local region centered on an A array is extracted from a mosaic image output from the image pickup device 14, the 2 × 2 pixels of G pixels at the 4 corners in the local region are disposed as illustrated in Fig. 5.

As illustrated in Fig. 5, taking the pixel values of the 2 × 2 pixels of G pixels as G1, G2, G3, G4 in sequence from top left to bottom right, the vertical direction difference absolute value of the pixel values of these G pixels is (|G1 - G3| + |G2 - G4|)/2, the difference absolute value in the horizontal direction is (|G1 - G2| + |G3 - G4|)/2, the difference absolute value in the diagonal direction towards the top right is |G2 - G3|, and the difference absolute value in the diagonal direction towards the top left is |G1 - G4|.

The correlation (correlation direction) can then be determined as the direction with the smallest difference absolute value out of these four correlation absolute values.

As illustrated in Fig. 4 or Fig. 5, when a 5 × 5 pixel local region is extracted from a mosaic image such that the 3 × 3 pixel A array is positioned at its center, there are 2 × 2 pixels of G pixels placed at the 4 corners thereof. Consequently, when the 3 × 3 pixels of the A array inside the above local region are pixels subject to synchronization processing, the sums (or the average values) of the correlation absolute values of the 4 corners are derived separately for each direction, and the direction having the smallest value out of the sums (or the average values) of the correlation absolute values for each direction is determined as the brightness correlation direction of the pixels subject to synchronization processing. The determined correlation direction may be employed when performing synchronization processing or the like.

### Feature (5)

Moreover, the basic array pattern P configuring the color filter array illustrated in Fig. 2 has point symmetry about the center of the basic array pattern (the center of the 4 G filters). Moreover, as illustrated in Fig. 3, each of the A array and the B array inside the basic array pattern also respectively have point symmetry about the central G filters, and also have top-bottom and left-right symmetry (line symmetry).

This symmetry enables the circuit scale of a processing circuit at a later stage to be made smaller, and to be simplified.

### Feature (6)

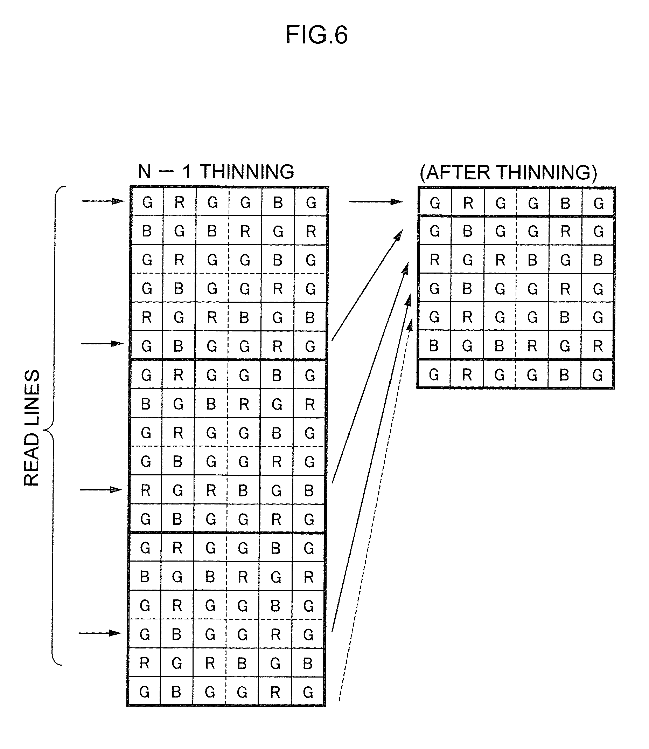

The basic array pattern P configuring the color filter array illustrated in Fig. 2 gives an image in which the basic array pattern P repeats in cases in which line image data of lines running along the horizontal direction is read from the image pickup device 14 at a vertical direction (N - 1) line cycle. Namely, for the color filter of Fig. 2, the image after thinning is an image in which the basic array pattern P is repeated. The basic array pattern is 6 × 6 pixels for the color filter of Fig. 2, and therefore, as illustrated by the arrows in Fig. 6, an image after thinning by reading line image data at a vertical direction 5 line cycle (vertical direction 1/5 thinning) is an image in which the basic array pattern P is repeated.

Namely, if the vertical direction lines of the basic array pattern P are designated as lines 1 to 6, from the top, then the sequence when reading at a vertical direction 5 line cycle is the sequence 1, 6, 5, 4, 3, 2, 1, 6, 5, 4, 3, 2, 1, and so on. Thus although there is a shift in phase, since the basic array pattern P is also contained in the image after thinning, this results in the image after thinning that includes an image of the repeated basic array pattern similar to that prior to thinning.

Accordingly, when the line image data is read for lines along the horizontal direction at a vertical direction (N - 1) line cycle, then the conditions to achieve an image in which the basic array pattern P is repeated is that there should be line symmetry with respect to the vertical direction for the entire region of the basic array pattern of the color filter array, or that there should be line symmetry with respect to the vertical direction in each of two vertical direction half cycle regions of the basic array pattern.

For example, in the color filter illustrated in Fig. 2, in the vertical direction half cycle regions of the basic array pattern, namely, in the region of lines 1 to 3 in the vertical direction, there is vertical direction line symmetry about the 2^{nd} line, and in the region of lines 4 to 6 in the vertical direction, there is line symmetry about the 5^{th} line.

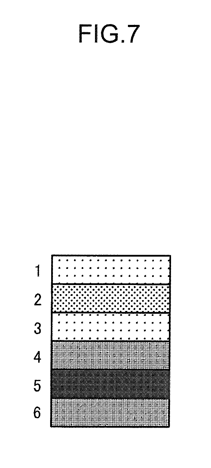

For such color filters, when line image data is read at a vertical direction (N - 1) line cycle, an image results in which the phase is shifted, but an image is formed in which the basic array pattern is repeated. Fig. 7 illustrates an image in which there is line symmetry in each of the two vertical direction half cycle regions of the basic array pattern of a color filter of N = 6.

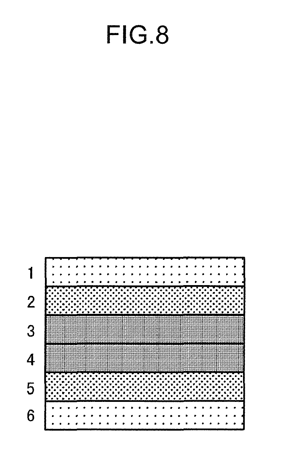

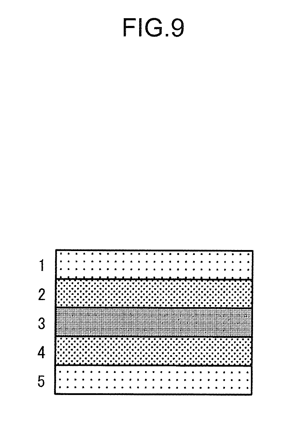

Moreover, Fig. 8 illustrates an image of a basic array pattern having line symmetry centered on the middle of lines 3, 4 when N = 6. Fig. 9 illustrates an image of a basic array pattern that has line symmetry about the 3^{rd} line when N = 5. In these cases as well, when the line image data is read at a vertical direction (N - 1) line cycle, then the image resulting after thinning is an image that includes an image of repeated basic array patterns.

Moreover, as for example in the basic array pattern illustrated in Fig. 2, there may also line symmetry in the horizontal direction, or there may also be line symmetry in the horizontal direction for each of the two horizontal direction half cycle regions of the basic array pattern.

The image capture processing section 16 performs predetermined processing on image capture signals output from the image pickup device 14, such as amplification processing, correlation double sampling processing, or A/D conversion processing, and then outputs as image data to the image processing section 20.

The image processing section 20 subjects the image data output from the image capture processing section 16 to what is referred to as synchronization processing. Namely, for all the pixels, interpolation is performed of image data for colors other than the corresponding respective color from pixel data of peripheral pixels, so as to generate R, G, B image data for all pixels. Then, what is referred to as YC conversion processing is performed to the generated R, G, B image data, to generate brightness data Y and color difference data Cr, Cb. Resizing processing is then performed to re-size these signals to a size according to the image capture mode.

The drive section 22 performs driving such as reading image capture signals from the image pickup device 14 according to instruction from the controller 24.

The controller 24 performs overall control, such as of the drive section 22 and the image processing section 20, according to such factors as the image capture mode. Detailed description is given later, however, briefly, the controller 24 instructs the drive section 22 to read image capture signals with a reading method according to the image capture mode, and instructs the image processing section 20 to perform image processing according to the image capture mode.

Since, depending on the image capture mode, there is a need to thin and read the image capture signals from the image pickup device 14, the controller 24 instructs the drive section 22 so as to thin with a thinning method according to the instructed image capture mode and to read the image capture signals.

As the image capture mode, there is a still image mode that captures a still image, and video modes, including an HD video mode that thins a captured image and generates High Definition (HD) video data at a comparatively high resolution and records this on a recording medium such as a memory card, not illustrated in the drawings, and a through video mode (live-view mode) in which a captured image is thinned and a through video (live-view image) of comparatively low resolution is output to a display section, not illustrated in the drawings. However, the type of image capture mode is not limited thereto.

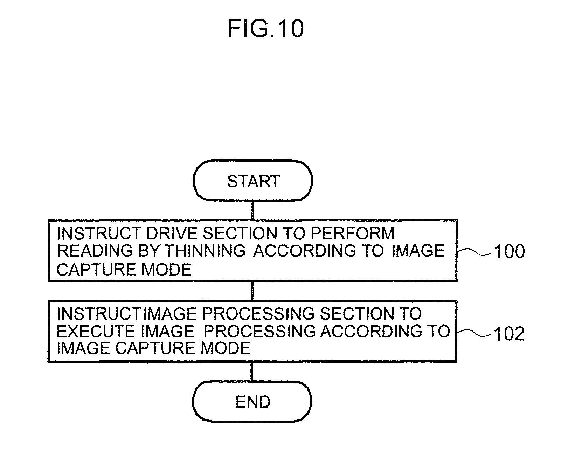

Explanation next follows regarding processing executed by the controller 24 as operation of the present exemplary embodiment, with reference to the flow chart illustrated in Fig. 10.

Note that the processing illustrated in Fig. 10 is executed in cases in which instruction is given to execute image capture according to the image capture mode. Moreover, in the following, explanation is given of cases in which line image data is read at a predetermined cycle in the vertical direction, namely cases in which reading is performed with lines in the vertical direction, other than the lines at the predetermined cycle, thinned out (discarded). Moreover, the line image data in these cases is a collection of pixel data of pixels in a row along the horizontal direction.

First, at step 100, the drive section 22 is instructed to read image data with the thinning method according to the image capture mode.

In the present exemplary embodiment, the drive section 22 is instructed to read line image data from the image pickup device 14 for lines running in the horizontal direction at a vertical direction (N - k) line cycle (wherein 0 < k < N). Namely, the drive section 22 is instructed to read line image data for lines running in the horizontal direction at a vertical direction cycle of that of the basic array pattern P, or smaller (in the present exemplary embodiment the drive section 22 and the controller 24 correspond to the line image data generation means).

For example, in the color filter illustrated in Fig. 2, N = M = 6, and k = 1 such that the image after thinning is an image containing the basic array pattern P. Consequently, the drive section 22 is instructed to read the line image data only of lines running in the horizontal direction that are at a vertical direction 5 line cycle. One line's worth of image data is accordingly read for every 5 lines in the vertical direction, and the resulting image is an image containing an image in which the basic array pattern P is repeated.

At step 102, the image processing section 20 is instructed to execute image processing according to the image capture mode (such as synchronization processing, YC conversion processing, or resizing processing) on the image data that has been thinned and read (in the present exemplary embodiment, the image processing section 20 and the controller 24 correspond to the image data generation means).

Note that the controller 24 and the image processing section 20 may be configured by a computer including for example a CPU, ROM, RAM, and non-volatile ROM. In such cases, configuration may be made such that a processing program for the above processing is, for example, stored in advance on the non-volatile ROM, and the CPU reads and executes this program.

Thus, in the present exemplary embodiment, the line image data is read at a cycle of less than the number of vertical direction pixels in the basic array pattern P, and thereby a smaller thinning ratio suffices, enabling deterioration in image quality to be suppressed, in comparison to cases in which line image data is read at a cycle of the number of vertical direction pixels in the basic array pattern P or greater.

Note that since the color filter according to the present exemplary embodiment has a G filter, an R filter, and a B filter, placed in each of the vertical direction and the horizontal direction, a G filter, an R filter, and a B filter are still included in each of the read line image data even when read at an (N - k) line cycle.

There are accordingly no instances in which the read line image data is read as line image data that includes only two colors G and R, or G and B, such as occurs in the conventional case of 1/2 thinning with a Bayer array. This thereby enables color reproduction whichever line image data is read. Moreover, even for a large size basic array pattern, thinning is still enabled at a low thinning ratio.

Moreover, in the present exemplary embodiment, due to reading at a (N - 1) line cycle in the vertical direction, the image after thinning is also an image containing an image in which the basic array pattern similar to that prior to thinning is repeated.

Consequently, image processing can be made common to that for non-thinned image data, such as that for still image capture.

### Second Exemplary Embodiment

Explanation next follows regarding a second exemplary embodiment of the present invention. Explanation is given of a modified example of a color filter in the present exemplary embodiment.

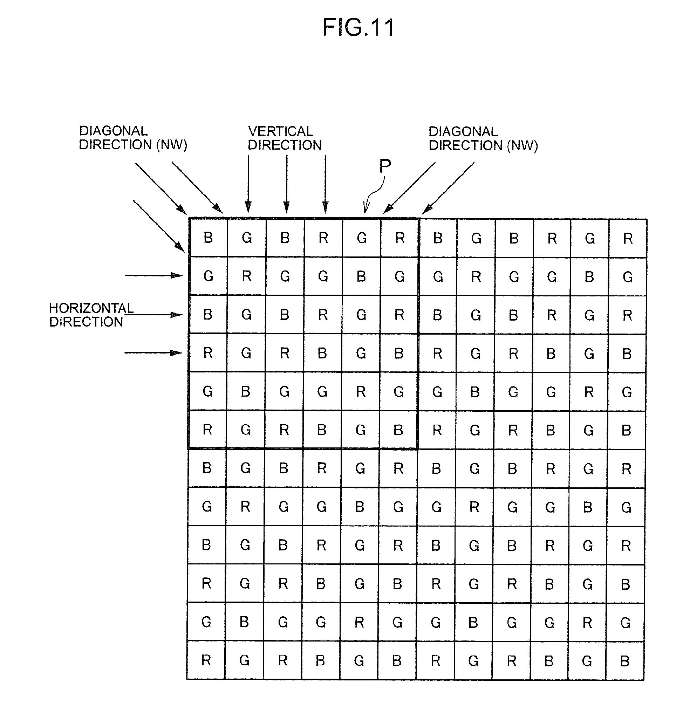

Fig. 11 illustrates a color filter according to the present exemplary embodiment. The color filter according to the present exemplary embodiment, as illustrated in Fig. 11, includes a basic array pattern P (the pattern indicated by the bold frame) formed from a square array pattern corresponding to 6 × 6 pixels, with the basic array pattern P disposed so as to repeat in both the horizontal direction and the vertical direction. Namely, the color filter array is arrayed such that the respective filters of each color R, G, B (the R filters, G filters, B filters) have a specific periodicity.

Moreover, in the color filter array illustrated in Fig. 11, the G filter is placed in each line of the color filter array in both the vertical direction and horizontal direction.

Moreover, in the color filter array illustrated in Fig. 11, one or more respectively of the R filter and the B filter is placed in the basic array pattern P in each of the lines of the color filter array in both the vertical direction and horizontal direction.

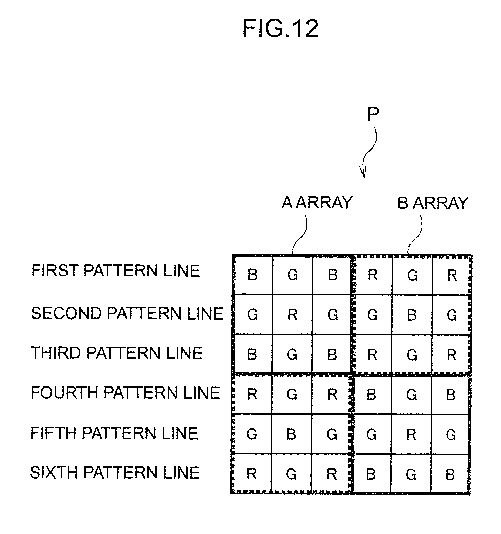

Fig. 12 illustrates a state in which the basic array pattern P illustrated in Fig. 11 has been divided into 4 sets of 3 × 3 pixels.

The basic array pattern P illustrated in Fig. 12 may be perceived an A array of the 3 × 3 pixels surrounded by the solid line frame, and a B array of the 3 × 3 pixels surrounded by the broken line frame, arrayed so as to be alternately disposed along the horizontal and vertical directions.

In the A array, the R filter is placed at the center, and the B filters are placed at the 4 corners, and G filters are placed on both sides of the central R filter at the top and bottom, and left and right. However in the B array, the B filter is placed at the center, and the R filters are placed at the 4 corners, and G filters are placed on both sides of the central B filter at the top and bottom, and left and right. Namely, the A array and the B array have reverse positional relationships for the R filters and the B filters, but have similar placement otherwise.

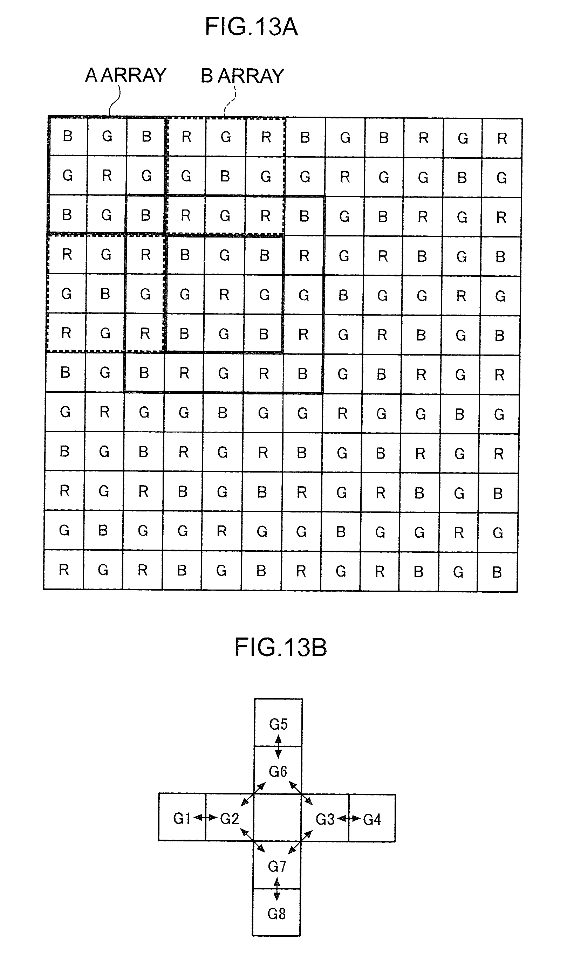

As illustrated in Fig. 13A, the color filter of the first exemplary embodiment may be perceived as the A array and the B array, arrayed alternately in the vertical direction and the horizontal direction.

As illustrated in Fig. 13A, when a 5 × 5 pixel local region (a region illustrated by a bold line frame) centered on an A array is extracted from a mosaic image output from the image pickup device 14, the 8 individual G pixels within this local region are placed in a cross shape, as illustrated in Fig. 13B. The G pixels therein are denoted, in sequence from left to right, G1, G2, G3, G4, and in sequence from top to bottom, G5, G6, G7, G8. Thus the pixels G1, G2, and the pixels G2, G3 are in adjacent contact with each other in the horizontal direction, the pixels G5, G6 and the pixels G7, G8 are in adjacent contact with each other in the vertical direction, the pixels G6, G3 and the pixels G2, G7 are in adjacent contact with each other in the diagonal direction toward the top left, and the pixels G6, G2 and the pixels G3, G7 are in adjacent contact with each other in the diagonal direction toward the top right.

Thus deriving the difference absolute values of the pixel values of these adjacent pixels, enables the direction from out of each of the horizontal, vertical and diagonal directions (NE, NW) that has the smallest change in brightness (the correlation direction with the highest correlation) to be determined by the minimum pixel separation.

Namely, the sum of the difference absolute values in the horizontal direction is |G1-G2| + |G3 - G4|, the sum of the difference absolute values in the horizontal direction is |G5-G6| + |G7 - G8|, the sum of the difference absolute values in the diagonal direction towards the top right is |G6 - G2| + |G3 - G7|, and the sum of the difference absolute values in the diagonal direction towards the top left is |G6 - G3| + |G2 G7|.

The correlation (correlation direction) can then be determined as the direction with the smallest difference absolute value out of these four correlation absolute values. Note that the determined correlation direction can be employed during the performance of processing such as synchronization processing.

Note that the basic array pattern P configuring the color filter illustrated in Fig. 11 has point symmetry about the center of the basic array pattern P.

As illustrated in Fig. 12, in the basic array pattern, the A array and the B array have point symmetry respectively about the central R filter or the central G filter, and are each symmetrical (have line symmetry) in the up-down direction and the left-right direction.

Moreover, the basic array pattern P configuring the color filter array illustrated in Fig. 11, when line image data is read from the image pickup device 14 for lines running in the horizontal direction that are at a (N - 1) line cycle in the vertical direction, an image results in which the basic array pattern P is repeated. Namely, for the color filter illustrated in Fig. 11, in the vertical direction half cycle regions of the basic array pattern, namely in the region of lines 1 to 3 in the vertical direction, there is vertical direction line symmetry about the 2^{nd} line, and in the region of lines 4 to 6 in the vertical direction, there is line symmetry about the 5^{th} line.

Thus the color filter according to the second exemplary embodiment has characteristics that are the same as the features (1), and (3) to (6) of the color filter according to the first exemplary embodiment.

### Third Exemplary Embodiment

Explanation next follows regarding a third exemplary embodiment of the present invention. In the present exemplary embodiment, explanation follows regarding a case of pixel mixing (for example pixel summing) with line image data read at a predetermined cycle in the vertical direction, and line image data read with the same array to that of the line image data that was read.

In the present exemplary embodiment, at step 100 of Fig. 10, the controller 24 instructs the drive section 22 to read line image data from the image pickup device 14 for lines running in the horizontal direction at a vertical direction (N - k) line cycle (wherein 0 < k ≤ N/2), and to read the line image data read from lines running in the horizontal direction at a vertical direction N line cycle away from the (N - k) line cycle line image data.

Moreover, at step 102 of Fig. 10, the controller 24 instructs the image processing section 20 to execute image processing to pixel mix respective pixels of the same color in the line image data read along the horizontal direction at the vertical direction (N - k) line cycle, and in the line image data read along the horizontal direction at the vertical direction N line cycle away from this line image data.

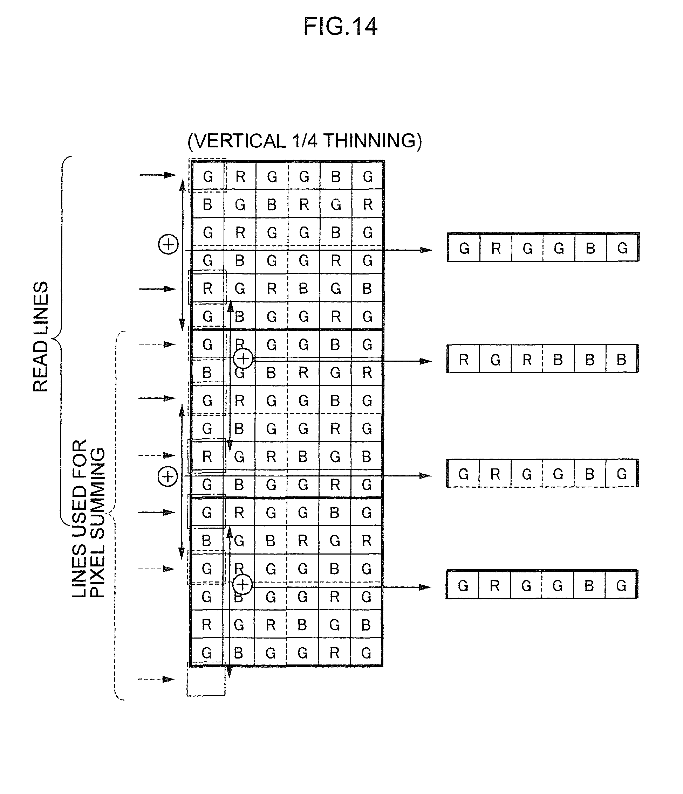

Fig. 14, illustrates a case in which, in the color filter with the repeatedly disposed 6 × 6 pixel basic array pattern P: line image data is read at the vertical direction (N - 2) line cycle, namely the line image data is read at a 4 line cycle as illustrated by the solid line arrows in Fig. 14 (vertical direction 1/4 thinning); then line image data is read at a vertical direction N line cycle, namely line image data is read at a 6 line cycle as illustrated by the intermittent line arrows in Fig. 14, away from the line image data that has been read at the 4 line cycle; then respective pixels of the same color as each other therein are pixel summed.

As illustrated in Fig. 14, the array of the line image data read at the 4 line cycle is the same as the array of the line image data 6 lines ahead from these line image data.

Thus by summing pixels that are the same color as each other in the line image data read at the 4 line cycle, and in the line image data of the same array that is 6 lines ahead in the vertical direction from these line image data, namely pixels that are at the same position as each other in the horizontal direction therein, the S/N ratio of the image can be improved in comparison to cases in which pixel summing is not performed.

Note that when the color filter illustrated in Fig. 14 is employed, in cases in which k > N/2, for example when k = 4, line image data is read at 2 line cycles (vertical direction 1/2 thinning), and line image data is read from 6 line cycles away from these line image data. In such cases, the line image data read at 2 line cycles, and the line image data read from 6 line cycles away from these line image data, end up being positioned at the same positions as each other in the vertical direction, which is not preferable. Thus for pixel mixing, preferably k ≤ N/2.

Note that although explanation has been given in the present exemplary embodiment of an example in which pixel values are simply summed for the same color of the line image data in the same arrays, there is no limitation thereto, and weighted summation may be performed.

### Fourth Exemplary Embodiment

Explanation next follows regarding a fourth exemplary embodiment of the present invention. In the present exemplary embodiment, the image pickup device 14 is configured by a CMOS sensor, and explanation follows regarding a case in which plural pixels configure a common pixel, and a signal is amplified for each of the common pixels.

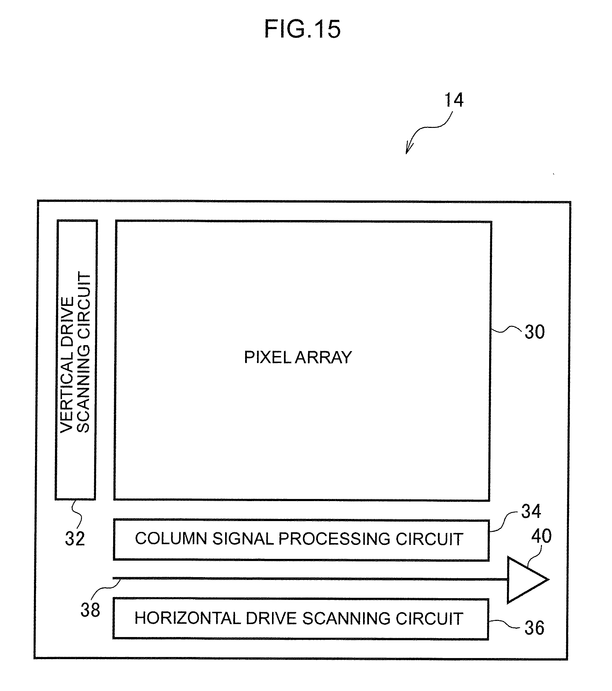

Fig. 15 illustrates a schematic configuration of the image pickup device 14 configured by a MOS (for example a CMOS) imaging sensor.

The image pickup device 14 illustrated in Fig. 15 is configured including a pixel array 30, a vertical drive scanning circuit 32, a column signal processing circuit 34, a horizontal drive scanning circuit 36, a signal line 38, and an amplifier 40, formed on a semiconductor substrate.

The pixel array 30 includes plural pixels arrayed in a two dimensional pattern in the horizontal direction and the vertical direction.

The vertical drive scanning circuit 32 selects and drives a collection of plural pixels on a scan line that runs along the horizontal direction. Note that it is also possible to select and drive pixels on a scan line one-by-one.

The column signal processing circuit 34 is configured by plural signal processing circuits, not illustrated in the drawings. These signal processing circuits are provided one for every common pixel in the horizontal direction. Each of the signal processing circuits is configured including an analogue-to-digital converter (ADC) circuit, not illustrated in the drawings. These ADC circuits convert image capture signals, according to the pixel values from each of the pixels, into respective digital signals.

The horizontal drive scanning circuit 36 is configured by switches, not illustrated in the drawings, that are respectively connected to each of the plural signal processing circuits contained in the column signal processing circuit 34, and by a control circuit, not illustrated in the drawings, that performs ON/OFF control of the switches. By switching the switches ON, the image capture signals processed in the signal processing circuits are output to the signal line 38, and the image capture signals are output to the outside of the image pickup device 14 through the amplifier 40.

Note that the vertical drive scanning circuit 32, the column signal processing circuit 34, and the horizontal drive scanning circuit 36 are controlled by the drive section 22.

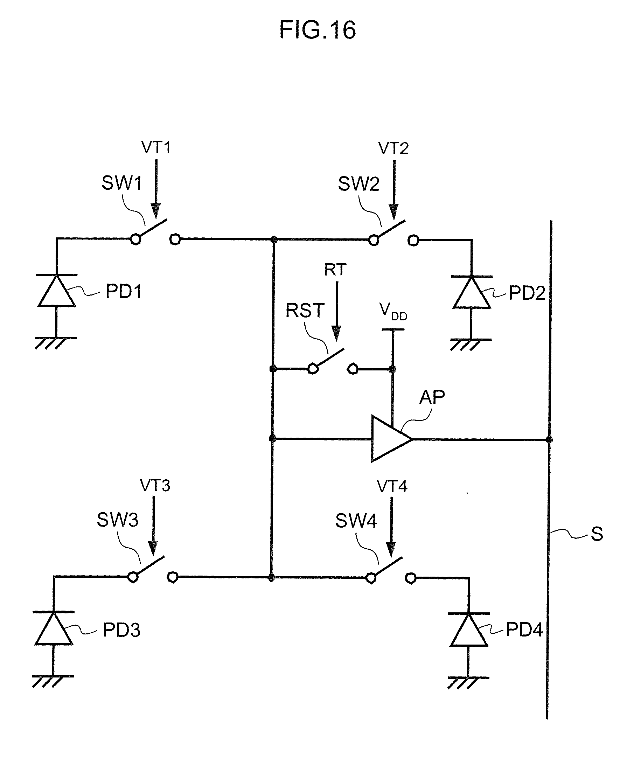

In the present exemplary embodiment, plural pixels configure a common pixel, and a signal is amplified for each common pixel. Fig. 16 illustrates a configuration in which 2 × 2 pixels in the vertical direction and the horizontal direction, a total of 4 pixels, are configured as a common pixel, and these 4 pixels are amplified by the same amplifier.

As illustrated in Fig. 16, cathodes of the photodiodes PD1 to PD4 that serve as pixels are each connected to one end of respective switches SW1 to SW4, each configured by for example an MOS transistor. The other ends of the switches SW1 to SW4 are connected to input terminals of a reset switch RST and an amplifier AP. The output terminal of the amplifier AP is connected to a signal line S. The signal line S is connected to the signal processing circuit, not illustrated in the drawings, of the column signal processing circuit 34.

The switches SW1 to SW4 are respectively input from the vertical drive scanning circuit 32 with charge transfer control signals VT1 to VT4. The vertical drive scanning circuit 32 switches ON the switches from which it is desired to read charges, such that charges accumulated in the photodiodes connected to the switches are amplified by the amplifier AP and output to the signal line S.

In the present exemplary embodiment, configuration is made with one amplifier AP connected to each 2 × 2 pixels, as illustrated in Fig. 16, thereby enabling a reduction in the number of switches, and enabling a higher miniaturization. Note that there is no limitation of the number of pixels configuring common pixels to 2 × 2, and configuration may be made with 3 × 3 pixels or more, or configuration may be made with different numbers of common pixels in the vertical direction and common pixels in the horizontal direction.

In a MOS type image sensor with the switches provided to each of the photodiodes such as in Fig. 16, charge sweeping is performed by what is referred to as a rolling shutter method in which charges accumulated in the photodiodes are swept out by applying a sequential shutter pulse to each of plural pixels, or to each single pixel, on scan lines.

More specifically, reset is not performed all at once for all the pixels within a single screen. Sequential reset, exposure start, and image capture signal reading is executed on each of plural pixels, or to each single pixel, on scan lines.

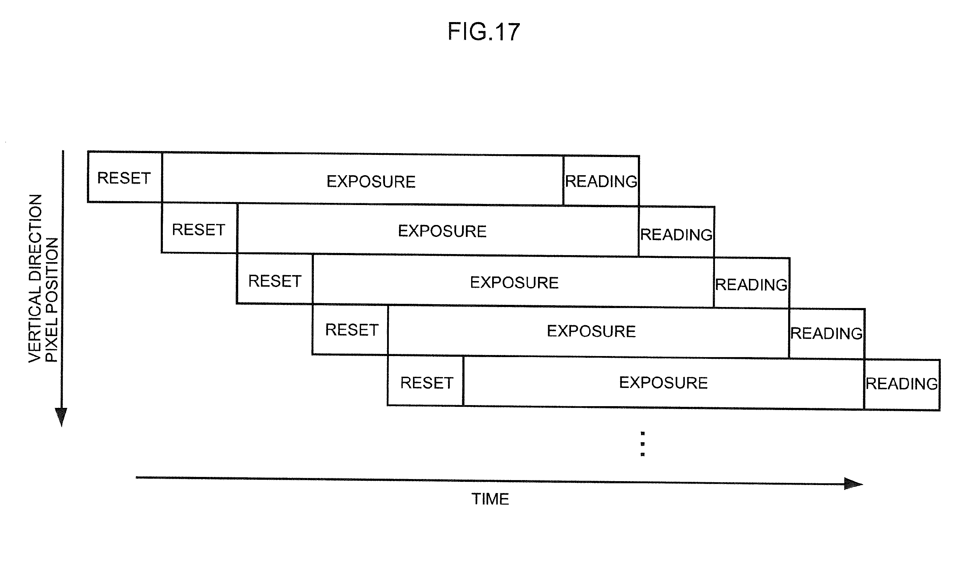

In cases employing a rolling shutter method, for example as illustrated in Fig. 17, reset, exposure, and reading is repeated, every scan line.

Moreover, due to plural pixels having a single common amplifier, it is not possible to read only one pixel from within each of the common pixels. Accordingly, when for example image data is read by thinning in the vertical direction, when trying to read plural line image data within a common pixel in the vertical direction, after completing reset, exposure and reading of pixels on a first reading line within the common pixel, reset, exposure and reading then needs to be performed of the pixels on a next reading line within the common pixel. This causes a large difference in exposure timing, creating undesirable effects such as false color in the image. For example, consider a case in which there are 3 × 3 pixels for each common pixel, and line image data is read at vertical direction 1/2 thinning, from the 1^{st} line and the 3^{rd} line; reset, exposure and reading cannot be performed for the pixels of the 3^{rd} line until reset, exposure and reading has been completed for the pixels of the 1^{st} line.

Thus in cases in which pixels are made common, preferably configuration is made such that plural pixels of (N - k) pixels or less in the vertical direction are made as common pixels, and image capture signals are amplified for each of the common pixels. Or, in cases in which there are L pixels' worth made common in the vertical direction, preferably configuration is made such that the pixel cycle (N - k) for thinning and reading in the vertical direction is larger than L.

For example, in cases in which, as explained in the first exemplary embodiment, a color filter is employed such as the one in Fig. 2 in which a 6 × 6 pixel basic array pattern is repeated, when reading line image data along the horizontal direction at a vertical direction (N - 1) line cycle, for k = 1, namely at a 5 line cycle, preferably pixels are made common for (N - k) = 5 pixels, or less, in the vertical direction. For example, if 2 × 2 pixels are made common pixels, since there are not plural lines of image data read from within each common pixel in the vertical direction, this enables large differences in exposure timings of each line to be avoided.

### Fifth Exemplary Embodiment

Explanation next follows regarding a fifth exemplary embodiment of the present invention. In the present exemplary embodiment, the lines for reading are switchable according to the image capture mode, namely explanation follows regarding cases in which the thinning method is switchable.

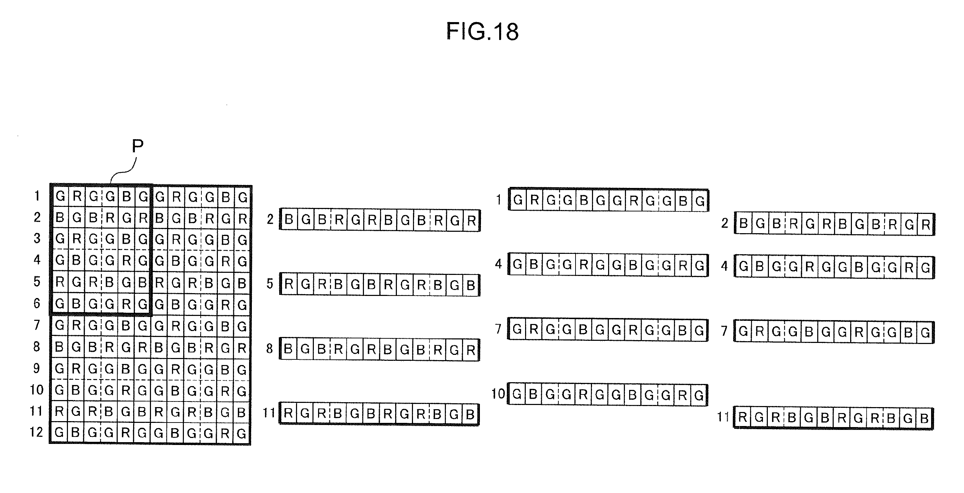

For a color filter in which the 6 × 6 pixel basic array pattern P illustrated in Fig. 18 is repeated, the line image data of the 2^{nd} line, the 5^{th} line, the 8^{th} line and the 11^{th} line contain more R, B than G. Thus in cases in which an image capture mode is selected to capture a subject with a lot of R, B, the controller 24 instructs the drive section 22 to read line image data at vertical direction 1/3 thinning, starting from the 2^{nd} line. This thereby enables the resolution sensitivity to be raised in cases in which image capture is made of a subject with a lot of R, B. Moreover, it also enables the S/N ratio of the image to be raised in cases in which image capture is made of a subject with extremely small amounts of R, B.

Moreover, as illustrated in Fig. 18, the line image data of the 1^{st} line, the 4^{th} line, the 7^{th} line and the 10^{th} line contains more G than R, B. Thus in cases in which an image capture mode is selected to capture a subject with a lot of G, the controller 24 instructs the drive section 22 to read line image data at vertical direction 1/3 thinning, starting from the 1^{st} line. This thereby enables the S/N ratio of the image to be raised in cases in which there is a lot of G.

Moreover, as illustrated in Fig. 18, there is about the same proportion for each of R, B, and G in the line image data of the 2^{nd} line, the 4^{th} line, the 7^{th} line and the 11^{th} line. Thus in cases in which an image capture mode is selected to capture a subject including a lot of black and white components, the controller 24 instructs the drive section 22 to read line image data in a sequence of the 2^{nd} line, the 4^{th} line, the 7^{th} line, and the 11^{th} line, and so on. This thereby enables the S/N ratio of the image to be raised in cases in which image capture is made of a subject with a lot of black and white components.

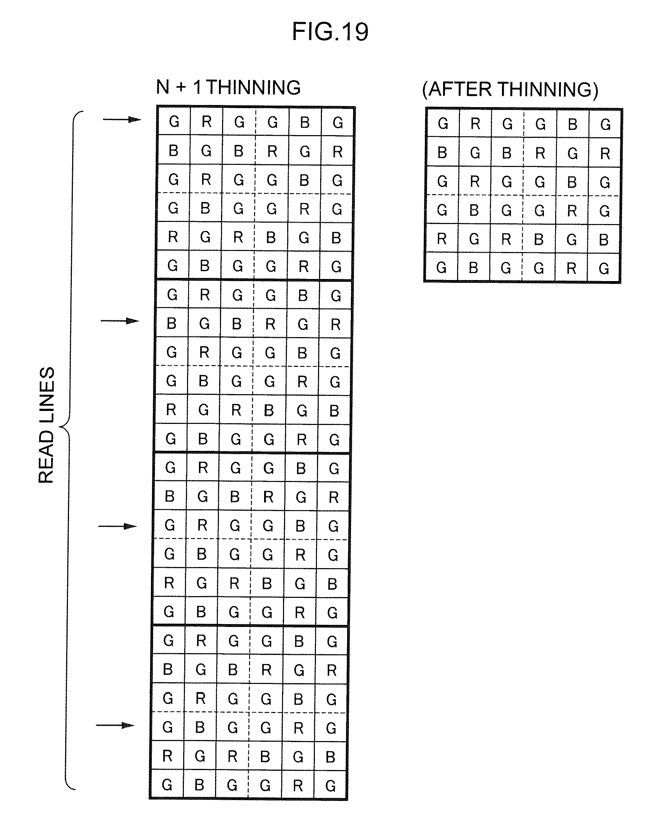

Moreover, for an image capture mode that does not require a comparatively high resolution, configuration may be made such that the controller 24 instructs the drive section 22 to read the line image data running in the horizontal direction at a (N + k) line cycle (wherein 0 < k < N) in the vertical direction, as illustrated in Fig. 19. Fig. 19 illustrates a case in which N = 6, k = 1, such that line image data is read at a 7 line cycle in the vertical direction. In such cases, as illustrated in Fig. 19, the image after thinning is also an image in which the basic array pattern P is repeated. This thereby enables the processing to be applied to the image data after thinning to be common to the image processing of non-thinned image data, such as in still image capture.

Thus the present exemplary embodiment enables the lines to be read to be switched, namely enables the thinning method to be switched, according to the image capture mode. This thereby enables the resolution and the S/N ratio of images to be appropriately controlled according to the image capture mode, and also enables Automatic White Balance (AWB) control and Automatic Exposure (AE) control to be appropriately set according to the image capture mode.

Moreover, as stated above, in a color filter with a conventional Bayer array, in cases in which one line's worth of image data has been read for each of an even number of lines in the vertical direction (for example vertical direction 1/2 thinning), this results in line image data being read that only contains two colors, G and R, or G and B, and so one line's worth of image data needs to be read every odd number of lines in the vertical direction.

In contrast thereto, in the color filter of the present exemplary embodiment, it is possible to read one line's worth of image data for each of an even number of lines in the vertical direction, and also possible to read one line's worth of image data for every odd number of lines in the vertical direction.

Thus, being able to read image data of whichever lines in the vertical direction, thereby enables various resolutions and frame rates to be accommodated. For example, depending on the image capture mode, the resolution is lowered in cases in which priority is desired for high frame rates, and the frame rate is lowered in cases in which the priority is for high resolution, thereby enabling various image capture modes to be accommodated.

Moreover, configuration may be made such that the lines to be read are switched according to the motion of the subject. For example, in cases in which the imaging apparatus is operated by panning, a movement amount of the subject is detected by employing subject data (for example inter-frame data) or by employing an external sensor, such as a gyro sensor.

The resolution and frame rate are then set according to the amount of movement of the subject, and then image data is read with a thinning method corresponding to the set resolution and frame rate. This thereby enables an optimum balance to be obtained between delay in motion of the subject and resolution.

Note that the color filter array is not limited to that described in each of the exemplary embodiments, and the present invention may also be applied to an imaging apparatus having an image pickup device with the following color filter arrays.

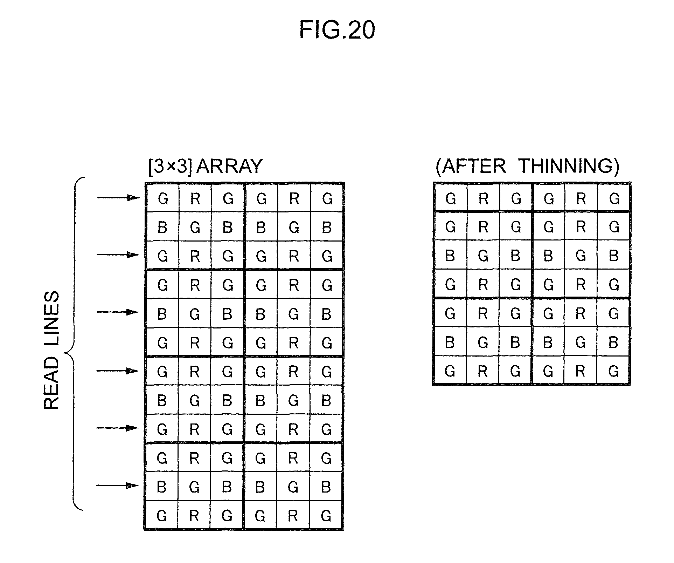

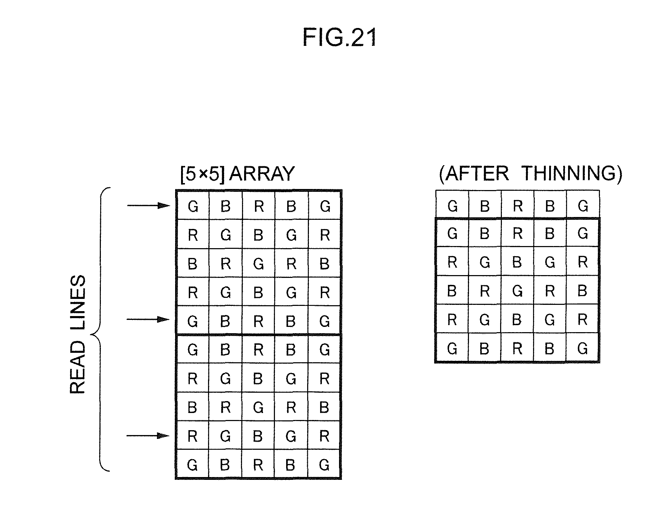

For example, as a color filter array having the above features (1), (2), (4), (5) and (6), there is, for example, a color filter array in which a basic array pattern P is the 3 × 3 pixel color filter, as illustrated in Fig. 20. This color filter array is configured by a repeating basic pattern with the G filters placed at the center and the 4 corners out of the 3 × 3 pixels, and the same number each of R and B placed on the remaining 4 pixels. As a color filter array having the above features (1), (2), (3), (4), (5), and (6), there is a color filter array of 5 × 5 pixels in the basic array pattern P, such as that illustrated in Fig. 21. This color filter array is configured by a repeating basic array pattern set with G placed along the two diagonal directions in the 5 × 5 pixels, and with R, B pixels placed on the remaining pixel positions such that there is 1 or more of each disposed in each of the horizontal direction and vertical direction lines in the 5 × 5 pixels, and set such the number of G is greater than the number of R and the number of B. These color filters have the feature (6), and so, as illustrated in Fig. 20 and Fig. 21, in cases in which the line image data is read at a (N - 1) line cycle in the vertical direction, this results in an image after thinning that is an image containing an image in which the basic array pattern is repeated.

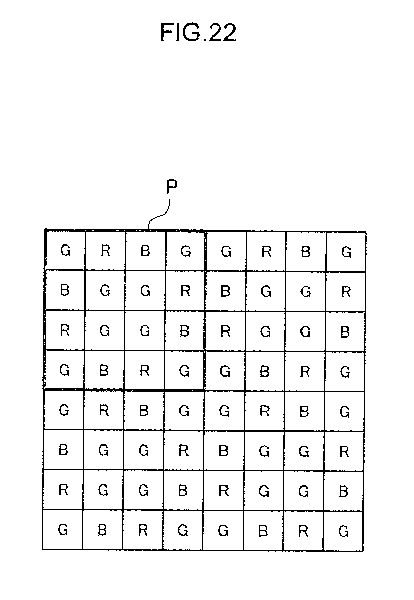

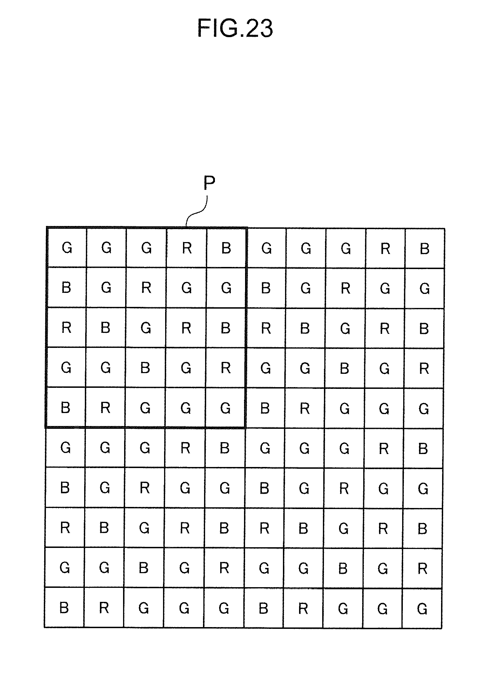

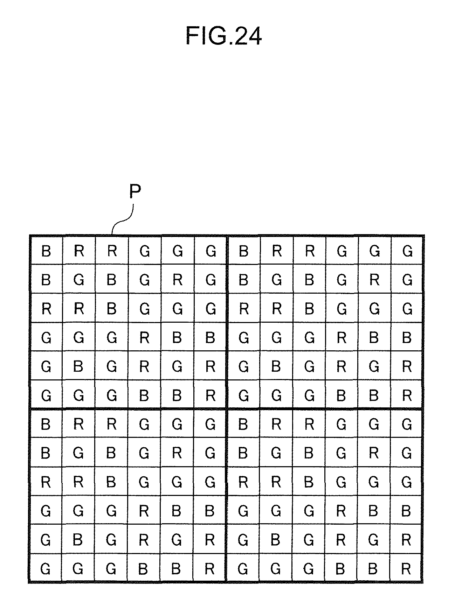

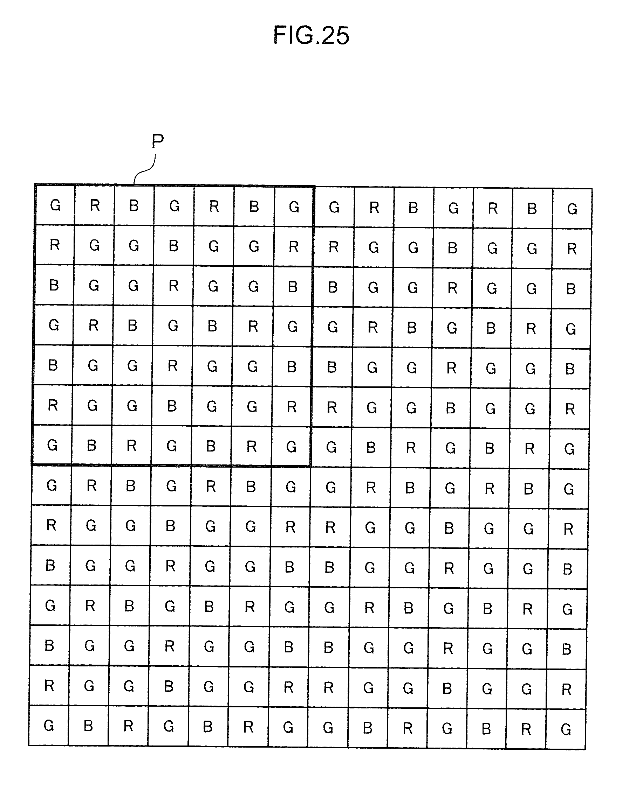

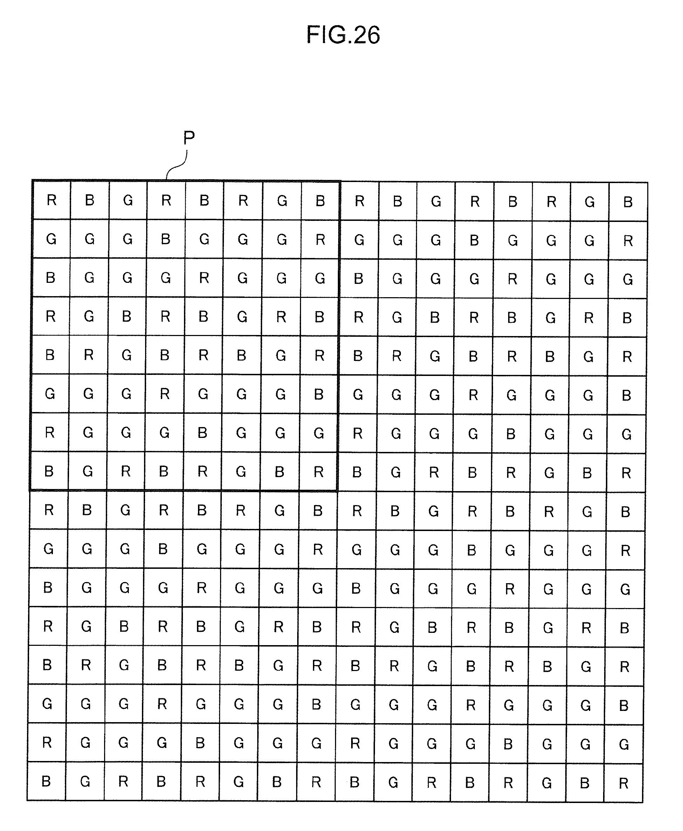

Moreover, as a color filter array having the above features (1), (3), (4), (5) and (6), there is a color filter array of 4 × 4 pixels of a basic array pattern P such as that illustrated in Fig. 22. This color filter array is a repeating basic array pattern in which G is placed along the two diagonal directions of the 4 × 4 pixels, and R, B pixels are placed on the remaining pixel positions such that there is 1 or more of each disposed in each of the horizontal direction and vertical direction lines in the 4 × 4 pixels, set such the number of G is greater than the number of R and the number of B. Moreover, as a color filter array having the above features (1), (2), (3) and (6), there is, as illustrated in Fig. 23, a color filter array in which the basic array pattern P has 5 × 5 pixels. Moreover, as a color filter array having the above features (1), (2), and (3), there is, as illustrated in Fig. 24, a color filter array in which the basic array pattern P has 6 × 6 pixels. This color filter array is configured by a repeating basic array pattern P including a first sub array with G placed in a rectangular shape at the external perimeter of an R or B, and a second sub array in which G is placed at a center portion, with two of each of the sub arrays alternately disposed so as to be adjacent to each other along the horizontal direction and the vertical direction. Such an array is feature (3) with the additional characteristic of 1 or more of each of R and B being placed in each line in the diagonal (NE, NW) directions (third directions) of the color filter array. Moreover, as a color filter array having the above features (1), (2), (3), (4), (5), and (6), there is, as illustrated in Fig. 25 a color filter array in which the basic array pattern P has 7 × 7 pixels, and, as a color filter array having the above features (1), (2), and (3) there is, as illustrated in Fig. 26, a color filter array in which the basic array pattern P has 8 × 8 pixels, and so on.

Note that in consideration of the ease of image processing, such as synchronization processing or thinning processing during video image capture, preferably N, M are each 10 or lower.

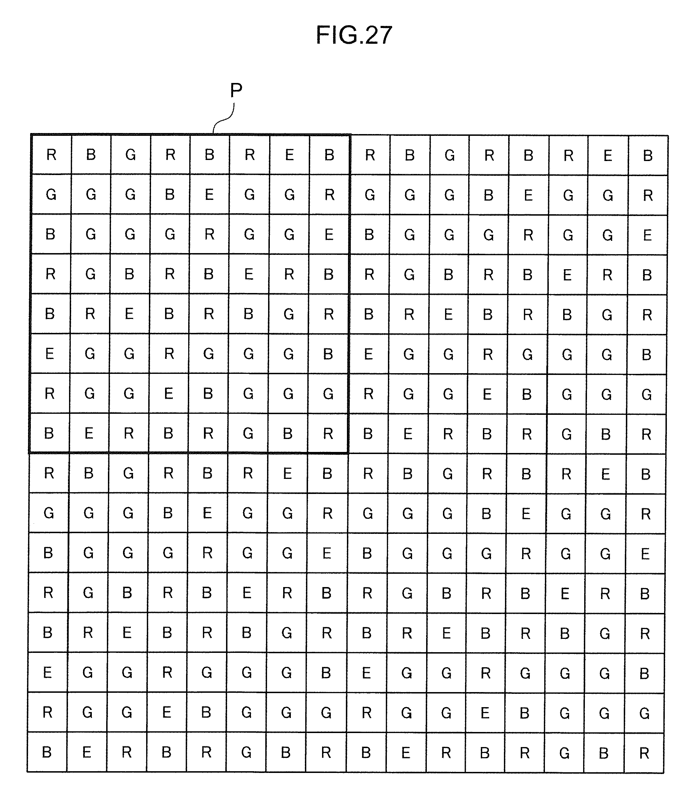

Moreover, although explanation has been given in the above exemplary embodiment of a case in which there is a color image pickup device having 3 primary color filters, RGB, the present invention is not limited thereto, and application may be made to a color filter having 4 colors of the three primary colors RGB + one other color (for example, emerald (E)), such as for example the color filter illustrated in Fig. 27. Moreover, the present invention may be applied to a color filter having a white or transparent (W) filter as the other color. For example, a W filter may be placed instead of the emerald of Fig. 27. In such cases, a combination of W and G, or W is the first color that contributes most to the brightness signal.

Moreover, the present invention may be applied to a color image pickup device including a color filter with a complementary color system of 4 colors with, in addition to G, C (cyan), M (magenta) and Y (yellow), that are the complementary colors of the primary colors RGB.

Moreover, in each of the above exemplary embodiments, explanation has been given of cases in which line image data running along the horizontal direction are read at a predetermined cycle in the vertical direction, however the present invention is also applicable to cases in which the line image data running along the vertical direction are read at a predetermined cycled in the horizontal direction.

Moreover, in the present exemplary embodiment, explanation has been given of cases in which the pixel signals of pixels in lines running in the horizontal direction are read from the image pickup device 14 at a vertical direction (N - k) line cycle to generate line image data, and image data is generated based on this line image data. However, configuration may be made such that pixel signals in all lines' worth of pixels are read, and then line image data of lines at a (N - k) line cycle are selectively employed (by not using, or by not storing, line image data of other lines) to generate image data. Moreover, pixel signals in all lines' worth of pixels may be read and temporarily stored, in memory such as RAM, and then line image data of lines at a (N - k) line cycle selectively employed to generate image data (in this embodiment, the image capture processing section 16 or the image processing section 20 corresponds to the line image data generation means).

It goes without saying that the present invention is not limited by the exemplary embodiments that are described above, and various other modifications may be implemented within a range not departing from the spirit of the present invention.

### [Description of Reference Numerals]

- 10: imaging apparatus
- 12: optical system
- 14: image pickup device
- 16: image capture processing section
- 20: image processing section
- 22: drive section
- 24: controller
- 30: pixel array
- 32: vertical drive scanning circuit
- 34: column signal processing circuit
- 36: horizontal drive scanning circuit
- 38: signal line
- 40: amplifier
- AP: amplifier
- P: basic array pattern
- PD 1 to PD 4: photo diode
- RST: reset switch
- S: signal line
- SW1 to SW4: switch

## Claims

1. An imaging apparatus comprising:
an image pickup device comprising a plurality of photoelectric conversion elements arrayed in a predetermined first direction and a second direction intersecting with the first direction;
a color filter that is provided above a plurality of pixels configured by the plurality of photoelectric conversion elements, the color filter having a repeatedly disposed basic array pattern wherein a first filter corresponding to a first color that contributes most to obtaining a brightness signal, and second filters respectively corresponding to 2 or more second colors other than the first color, are placed in a predetermined pattern of (N × M) pixels in the first direction and the second direction (wherein N and M are integers of 3 or more);
a line image data generation means that reads pixel signals from a plurality of pixels at a set cycle from the image pickup device, and, from the read pixel signals, generates line image data configured from pixel signals of pixels, from out of the plurality of pixels, that are arrayed running along the second direction and are arrayed at an (N - k) line cycle in the first direction (wherein k is a positive integer such that 0 < k < N); and
an image data generation means that generates image data based on the line image data.

2. The imaging apparatus of claim 1, wherein:
the line image data generation means reads, as the set cycle, the pixel signals from the image pickup device at the (N - k) line cycle in the first direction, and generates the line image data.

3. The imaging apparatus of claim 1 or claim 2, wherein:
the basic array pattern has line symmetry with respect to the first direction for the entire region of the basic array pattern, or has line symmetry with respect to the first direction in each region of two half cycles of the basic array pattern in the first direction; and
the line image data generation means generates line image data configured from pixel signals of pixels that are arrayed running along the second direction and are arrayed, as the set cycle, at an (N - 1) line cycle in the first direction.

4. The imaging apparatus of any one of claim 1 to claim 3, wherein:
the line image data generation means generates line image data configured from pixel signals of pixels that are arrayed running along the second direction and are arrayed, as the set cycle, at an (N - k) line cycle in the first direction (wherein 0 < k ≤ N/2), and generates line image data configured from pixel signals of pixels that are arrayed running along the second direction and are arrayed at an N line cycle in the first direction away from the (N - k) line cycle line image data; and
the imaging apparatus further comprises a pixel mixing means that respectively mixes pixels that are the same color pixels as each other from the line image data configured from the pixel signals of the pixels that are arrayed running along the second direction and are arrayed at the (N - k) line cycle in the first direction, and from the line image data configured from pixel signals of the pixels that are running arrayed along the second direction and are arrayed at the N line cycle in the first direction away from the (N - k) line image data.

5. The imaging apparatus of any one of claim 1 to claim 4, wherein:
the image pickup device includes a plurality of pixels of (N - k) pixels or less in the first direction as a common pixel, and includes an amplification means that amplifies an image capture signal for every common pixel.

6. The imaging apparatus of any one of claim 1 to claim 5, further comprising:
a switching means that switches between a first generation method that generates line image data configured from pixel signals of pixels that are arrayed running along the second direction and are arrayed at an (N - k) line cycle in the first direction (wherein 0 < k < N), and a second generation method that generates line image data configured from pixel signals of pixels that are arrayed running along the second direction and are arrayed at an (N + k) line cycle in the first direction.

7. The imaging apparatus of any one of claim 1 to claim 6, wherein:
one or more of the first filter is placed in each line in the color filter plane in the first direction, the second direction, and third directions that intersect with the first direction and the second direction; and
the second filters that respectively correspond to each color of the second colors are placed such that there is 1 or more of each in each line in the basic array pattern in the first direction and the second direction.

8. The imaging apparatus of any one of claim 1 to claim 7, wherein:
the color filter includes a square array corresponding to 2 × 2 pixels configured from the first filter.

9. The imaging apparatus of any one of claim 1 to claim 8, wherein:
the first color is green (G), and the second colors are red (R) and blue (B).

10. The imaging apparatus of claim 9, wherein:
the color filter includes an R filter, a G filter, and a B filter corresponding to colors red (R), green (G) and blue (B); and
the color filter is configured by a first array and a second array alternately arrayed in the first direction and the second direction, wherein the first array corresponds to 3 × 3 pixels with the G filter placed at the center and the 4 corners, the B filter placed at the top and bottom of the central G filter, and the R filter placed at the left and right of the central G filter, and the second array corresponds to 3 × 3 pixels with the G filter placed at the center and the 4 corners, the R filter placed at the top and bottom of the central G filter, and the B filter placed at the left and right of the central G filter.

11. The imaging apparatus of claim 9, wherein:
the color filter includes an R filter, a G filter, and a B filter corresponding to colors red (R), green (G) and blue (B); and
the color filter is configured by a first array and a second array alternately arrayed in the first direction and the second direction, wherein the first array corresponds to 3 × 3 pixels with the R filter placed at the center, the B filter placed at the 4 corners, and the G filter placed at the top, bottom, left and right of the central R filter, and the second array corresponds to 3 × 3 pixels with the B filter placed at the center, the R filter placed at the 4 corners, and the G filter placed at the top, bottom, left and right of the central B filter.

12. The imaging apparatus of any one of claim 1 to claim 11, wherein the color filter has point symmetry about the center of the basic array pattern.

13. A control method for an imaging apparatus comprising an image pickup device including a plurality of photoelectric conversion elements arrayed in a predetermined first direction and a second direction intersecting with the first direction, and a color filter that is provided above a plurality of pixels configured by the plurality of photoelectric conversion elements, the color filter having a repeatedly disposed basic array pattern wherein a first filter corresponding to a first color that contributes most to obtaining a brightness signal, and second filters respectively corresponding to 2 or more second colors other than the first color, are placed in a predetermined pattern of (N × M) pixels in the first direction and the second direction (wherein N and M are integers of 3 or more), the control method comprising:
reading pixel signals from a plurality of pixels at a set cycle from the image pickup device;
generating, from the read pixel signals, line image data configured from pixel signals of pixels, from out of the plurality of pixels, that are arrayed running along the second direction and are arrayed at an (N - k) line cycle in the first direction (wherein k is a positive integer such that 0 < k < N); and
generating image data based on the line image data.

14. A control program that causes processing to be executed in a computer that controls an imaging apparatus comprising an image pickup device including a plurality of photoelectric conversion elements arrayed in a predetermined first direction and a second direction intersecting with the first direction, and a color filter that is provided above a plurality of pixels configured by the plurality of photoelectric conversion elements, the color filter having a repeatedly disposed basic array pattern wherein a first filter corresponding to a first color that contributes most to obtaining a brightness signal, and second filters respectively corresponding to 2 or more second colors other than the first color, are placed in a predetermined pattern of (N × M) pixels in the first direction and the second direction (wherein N and M are integers of 3 or more), the processing comprising:
a step of reading pixel signals from a plurality of pixels at a set cycle from the image pickup device;
a step of generating, from the read pixel signals, line image data configured from pixel signals of pixels, from out of the plurality of pixels, that are arrayed running along the second direction and are arrayed at an (N - k) line cycle in the first direction (wherein k is a positive integer such that 0 < k < N); and
a step of generating image data based on the line image data.

15. A control program that causes processing to be executed in a computer, the processing comprising:
a step of generating line image data from
pixel signals of pixel signals in a plurality of pixels read at a set cycle from an image pickup device including a plurality of photoelectric conversion elements arrayed in a predetermined first direction and a second direction intersecting with the first direction, and a color filter that is provided above a plurality of pixels configured by the plurality of photoelectric conversion elements, the color filter having a repeatedly disposed basic array pattern wherein a first filter corresponding to a first color that contributes most to obtaining a brightness signal, and second filters respectively corresponding to 2 or more second colors other than the first color, are placed in a predetermined pattern of (N × M) pixels in the first direction and the second direction (wherein N and M are integers of 3 or more), with the line image data configured from pixel signals of pixels, from out of the plurality of pixels, that are arrayed running along the second direction and are arrayed at a cycle of (N - k) in the first direction (wherein k is a positive integer such that 0 < k < N); and
a step of generating image data based on the line image data.
